# EUROPÄISCHE PATENTSCHRIFT

(11) **EP 1 194 322 B1**
(45) Veröffentlichungstag und Bekanntmachung des Hinweises auf die Patenterteilung: **08.06.2005**
(21) Anmeldenummer: 00949194.5
(22) Anmeldetag: 20.06.2000
(51) Int. Cl.: B60T 13/68, B60T 8/36, F15B 13/04, F15B 13/043, F16K 31/06

(54) **ELEKTROMAGNETVENTIL, INSBESONDERE FÜR HYDRAULISCHE BREMSANLAGEN MIT SCHLUPFREGELUNG**
SOLENOID VALVE, ESPECIALLY FOR HYDRAULIC BRAKE SYSTEMS WITH SLIP CONTROL
SOUPAPE ELECTROMAGNETIQUE, NOTAMMENT POUR SYSTEMES DE FREINAGE HYDRAULIQUES A ANTIBLOCAGE

(30) Priorität: 23.06.1999 DE 19928750; 06.08.1999 DE 19936711
(43) Veröffentlichungstag der Anmeldung: 10.04.2002
(73) Patentinhaber: Continental Teves AG & Co. oHG, 60488 Frankfurt (DE)
(72) Erfinder: VOSS, Christoph, D-60386 Frankfurt/Main (DE); KAISER, Ralf, D-55252 Mainz-Kastel (DE); HOLL, Frank, D-56269 Marienhausen (DE)
(86) Internationale Anmeldenummer: PCT/EP2000/005653
(87) Internationale Veröffentlichungsnummer: WO 2001/000473

(56) Entgegenhaltungen:
- DE-A- 19 604 315
- DE-A- 19 708 425
- DE-A- 19 843 762

## Beschreibung

Die Erfindung betrifft ein Elektromagnetventil, insbesondere für hydraulische Bremsanlagen mit Schlupfregelung, nach dem Oberbegriff des Patentanspruchs 1.

Derartige konventionelle, hinreichend bekannte Ventile zur Durchflußsteuerung von Fluiden bei schlupfgeregelten hydraulischen Bremsanlagen finden vielfältige praktische Verwendung.

Aus der DE 198 37 207 A1 ist bereits ein in Grundstellung geöffnetes Elektromagnetventil für eine schlupfgeregelte hydraulische Bremsanlage bekannt geworden, dessen Ventilgehäuse in Patronenbauweise ausgeführt ist, das vorzugsweise als aus einem Automatenstahl hergestelltes Drehteil in einen blockförmigen Ventilaufnahmekörper eingestemmt ist. Auch die den Ventilsitz bildende Ventilplatte ist aus einem relativ massiven, vorzugsweise gleichfalls aus einem Automatenstahl bestehenden Drehteil hergestellt, welches am unteren Endbereich des Ventilgehäuses mittels einer Verstemmung gehalten wird. Der mit dem Ventilsitz zusammenwirkende Ventilstößel ist innerhalb des Ventilgehäuses geführt und stellt ein massives, aus einem Vollzylinder bestehendes Schaftteil dar, welches sich in Verbindung mit einer Einstellbuchse an einer Stirnfläche des Magnetankers abstützt, der innerhalb des Ventilhülsenabschnittes am Ventilgehäuse geführt ist. Um den Ventilstößel in der Grundstellung des Elektromagnetventils vom Ventilsitz abgehoben zu halten, ist koaxial zum Ventilstößel eine sog. Rückstellfeder vorgesehen, die mit ihrem einen Federende den Ventilstößel mit der Einstellbuchse in Richtung auf den Magnetanker drückt.

Es sind aber auch bereits Elektromagnetventile des in Grundstellung geschlossenen Typs bekannt geworden, wozu beispielhaft auf die DE 19 72 7654 A1 verwiesen wird. Abweichend von dem bereits geschilderten, in Grundstellung geöffneten Ventil bildet bei dem in Grundstellung geschlossenen Ventil der aus dem Vollen gefertigten Ventilstößel eine im wesentlichen eigenständig handhabbare Unterbaugruppe mit dem Magnetanker, die mittels einer sich in einem Magnetkern abstützenden Druckfeder auf den Ventilsitz gerichtet ist und diesen in der besagten Grundstellung des Elektromagnetventils verschlossen hält.

Nachteilig anzusehen ist bei den zuvor beschriebenen Elektromagnetventilen der relativ große Fertigungsaufwand, der sowohl zur Herstellung der Ventileinzelheiten als auch zur Herstellung und zum Einsatz einer funktionsfähigen Gesamtbaugruppe in einem Ventilaufnahmekörper erforderlich ist.

Daher ist es die Aufgabe der Erfindung, ein Elektromagnetventil der in Grundstellung geöffneten oder geschlossenen Ausführungsform dahingehend zu verbessern, daß bei gleichzeitiger Gewährleistung der Funktionssicherheit und Einhaltung eines relativ einfachen, miniaturisierten Aufbaus eine maßgebliche Reduzierung des Herstellaufwandes erreicht wird.

Erfindungsgemäß wird die gestellte Aufgabe für ein Elektromagnetventil der eingangs genannten Art durch die kennzeichnenden Merkmale des Patentanspruchs 1 gelöst.

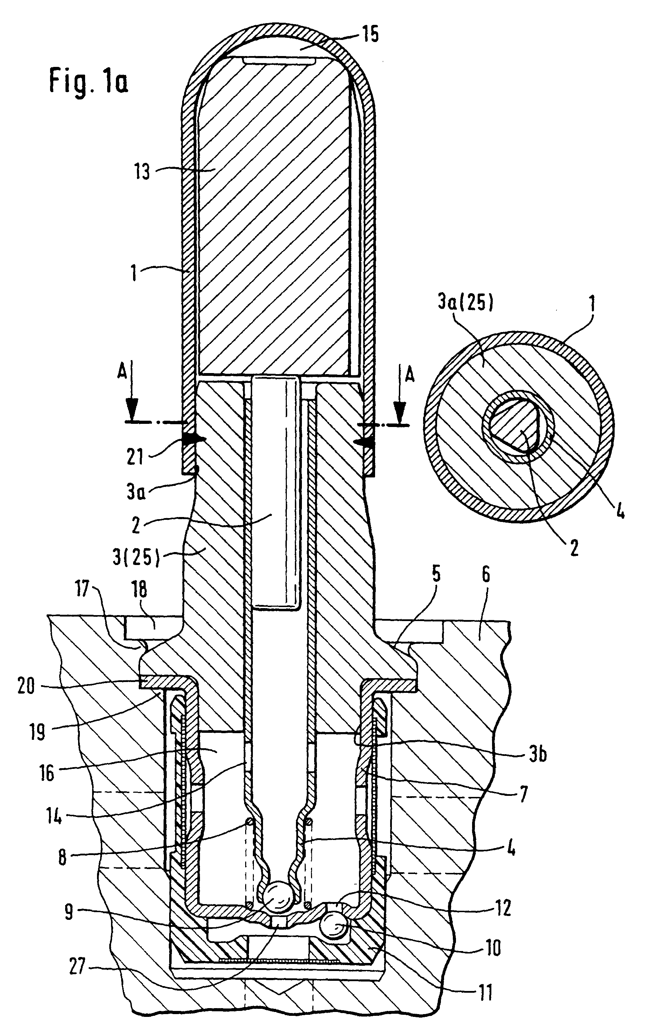

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen gemäß den Figuren 1a bis 3 näher dargestellt und erläutert werden.

Es zeigen im einzelnen:
Figuren 1a - 1e zweckmäßige Ausgestaltungsvarianten zur Ausführung eines in Grundstellung geöffneten Elektromagnetventils,
Fig. 2a - 2d ein in Grundstellung geschlossenes Elektromagnetventil in verschiedenen konstruktiven Ausführungsvarianten,
Fig. 3 eine Ausgestaltungsvariante der in den Figuren 1a - 1e gezeigten Elektromagnetventile.

Zunächst soll anhand der Fig. 1a der grundlegende Gesamtaufbau des in Grundstellung geöffneten Elektromagnetventils beschrieben werden. Das im Querschnitt gezeigte Elektromagnetventil weist ein buchsenförmiges Ventilgehäuse 3 auf, das an beiden Endbereichen mit Führungsflächen 3a, 3b versehen ist, um eine domförmige Ventilhülse 1 und anderenends einen topfförmigen Ventilsitz - Aufnahmekörper 7 zu halten. Das Ventilgehäuse 3 bildet somit einen für die vorgenannten Teile geeigneten Zentralkörper, der zugleich die Funktion des Magnetkerns 25 übernimmt. Zwecks einer möglichst kostengünstigen Herstellung vorgenannter Teile ist das Ventilgehäuse 3 aus einem Kaltfließpreßteil, die Ventilhülse 1 und der topfförmige Ventilsitz - Aufnahmekörper 7 als Tiefziehteil ausgebildet, wobei der Ventilsitz- Aufnahmekörper 7 im topfförmigen Boden mittels eines Prägeverfahrens die beiden Ventilsitzflächen für ein Rückschlagventil 10 und das am Ventilstößel 4 angebrachte Ventilschließglied 9 aufweist. Ein weiterer, herstelltechnisch und auch funktionell sinnvoller Aufbau ergibt sich durch die Ausbildung des Ventilstößels 4 als dünnwandiges Hülsenteil, das entweder als Rundknetteil oder eventuell auch als Tiefziehteil präzise und äußerst kostengünstig hergestellt werden kann. Die durch die dünnwandige Hülsenkontur des Ventilstößels 4 vorgegebene einfache Kontur erlaubt gemäß der Abbildung nach Fig. 1a eine besonders günstige Plazierung der Rückstellfeder 8, die konzentrisch am Ventilstößel 4 gehalten ist, so daß sie sich mit ihrem einen Windungsende an einer trichterförmigen Erweiterung des Stößelschaftes und mit ihrem anderen Windungsende am Boden des topfförmigen Ventilsitz - Aufnahmekörpers 7 abstützt. Das eigentliche Ventilschließglied 9 wird in der abbildungsgemäßen Ausführung durch eine zangenförmig im Endbereich des Ventilstößels 4 umgriffene Stahlkugel gebildet. Auf der vom Ventilschließglied 9 abgewandten Seite am Boden des topfförmigen Ventilsitz -Aufnahmekörpers 7 befindet sich ferner das bereits erwähnte Rückschlagventil 10 gleichfalls als Stahlkugel ausgeführt, die durch einen über den Ventilsitz - Aufnahmekörper 7 aufgeschobenen Filtertopf 11 in seiner Lage an einer den zweiten Ventilsitz aufweisenden Bypassöffnung 12 im Topfboden fixiert ist. Innerhalb des Ventilstößels 4 befindet sich ein Einstellstift 2, der aus dem Ventilstößel 4 in Richtung auf den Magnetanker 13 hervorsteht. Der Einstellstift 2 besteht aus einem Mehrkantprofil, welches gemäß der Schnittdarstellung A-A einen dreieckigen Profilquerschnitt aufweist und der zur Einstellung des Magnetanker-Restluftspaltes innerhalb des Stößelrohrs verschiebbar ist und mit diesem eine Preßpassung bildet.

Ergänzend soll darauf hingewiesen werden, daß selbstverständlich nach vollzogener Einjustierung des Einstellstiftes 2 im Ventilstößel 4 eine zusätzliche Lagefixierung vorgenannter Teile durch entsprechende kraft- und/oder formschlüssige Maßnahmen erfolgen kann.

Ein weiterer Beitrag zur kostengünstigen Herstellung des Elektromagnetventils leistet der gleichfalls aus einem Kaltfließpreßteil hergestellte Magnetanker 13, der sich abbildungsgemäß oberhalb des als Magnetkern 25 wirksamen Ventilgehäuses 3 in der Ventilhülse 1 erstreckt. Auch der Magnetanker 13 kann aus einem Mehrkantprofil gefertigt werden, Der Magnetanker 13 kann sich vorteilhafterweise unabhängig von der Lage des Ventilstößels 4 in der Ventilhülse 1 ausrichten. Der Magnetanker 13 und der Ventilstößel 4 bilden somit voneinander unabhängige Losteile, die zwar als axiale Kraftübertragungsglieder gekoppelt, jedoch in radialer Richtung voneinander unabhängig wirksam sind. Dadurch, daß der Ventilstößel 4 quasi als Rohr ausgeführt ist sowie der Einstellstift 2 und ggf. auch der Magnetanker 13 aus Mehrkantprofilen bestehen, ergibt sich ein ungehinderter Druckausgleich innerhalb des mit einem Querkanal 14 versehenen Ventilstößels 4 als auch innerhalb der Ventilhülse 1 in die zu beiden Seiten des Ventilgehäuses 3 gelegenen Hohlräume 15, 16. Das hierdurch zu einer Patrone ausgebildete Elektromagnetventil weist demnach lediglich zur Befestigung im blockförmigen Ventilträger 6 ein im Bereich der Verstemmung 17 relativ dickwandigen Verlauf des Ventilgehäuses 3 in Form einer Schulter 5 auf, an der infolge einer auf den Ventilträger 6 ausgeübten axialen Verstemmkraft eine überwiegend kraftschlüssige Verbindung des Elektromagnetventils in der Aufnahmebohrung 18 des Ventilträgers 6 zustande kommt. Die Aufnahmebohrung 18 ist als Stufenbohrung ausgeführt, wobei zwischen der Schulter 5 am Ventilgehäuse 3 und einer Stufe 19 im Ventilträger 6 der Rand 20 des topfförmigen Ventilsitz - Aufnahmekörpers 7 nach abgeschlossener Verstemmoperation flüssigkeitsdicht eingespannt ist. Der in den topfförmigen Ventilsitz - Aufnahmekörper 7 sich erstreckende Fortsatz 31 mit der Führungsfläche 3b am Ventilgehäuse 3 sorgt für eine sichere Vormontage und Handhabung des Ventilsitz - Aufnahmekörpers 7 am Ventilgehäuse 3 , bevor die entsprechenden Teile in Verbindung mit dem Filtertopf 11 und dem darin befindlichen Rückschlagventil 10 in den Ventilträger 6 eingesetzt werden. Beispielhaft ist die Ventilhülse 1 nicht nur auf einen zylindrischen Vorsprung mit der Führungsfläche 3a des Ventilgehäuses 3 aufgeschoben, sondern nach vollzogener Einjustierung mittels einer Schweißverbindung 19 dauerhaft befestigt. Anstelle der Schweißverbindung 19 sind selbstverständlich alternative kraft- als auch formschlüssige Befestigungsmethoden denkbar. Bis auf die Ausnahme des seitlich im Ventil angeordneten Rückschlagventils 10 sind alle übrigen vorgenannten Bauteile konzentrisch zur Ventillängsachse angeordnet.

Abweichend von der bisher beschriebenen Ausführungsform nach Fig. 1a sollen nunmehr im nachfolgenden konstruktive Varianten des dargestellten Elektromagnetventils mit ihren von Fig. 1a abweichenden Einzelheiten erläutert werden. Soweit hierzu nicht alle Einzelheiten der jeweiligen Ventilvarianten beschrieben sind, entsprechen diese der Ausführungsform nach Fig. 1a und es sind diese der vorausgegangenen Erläuterung zu entnehmen.

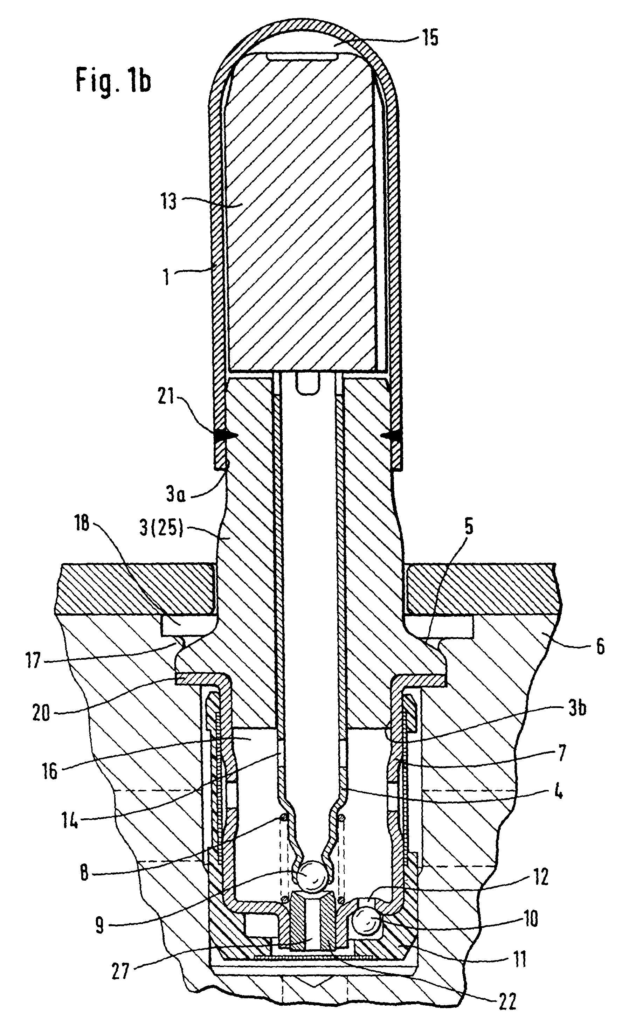

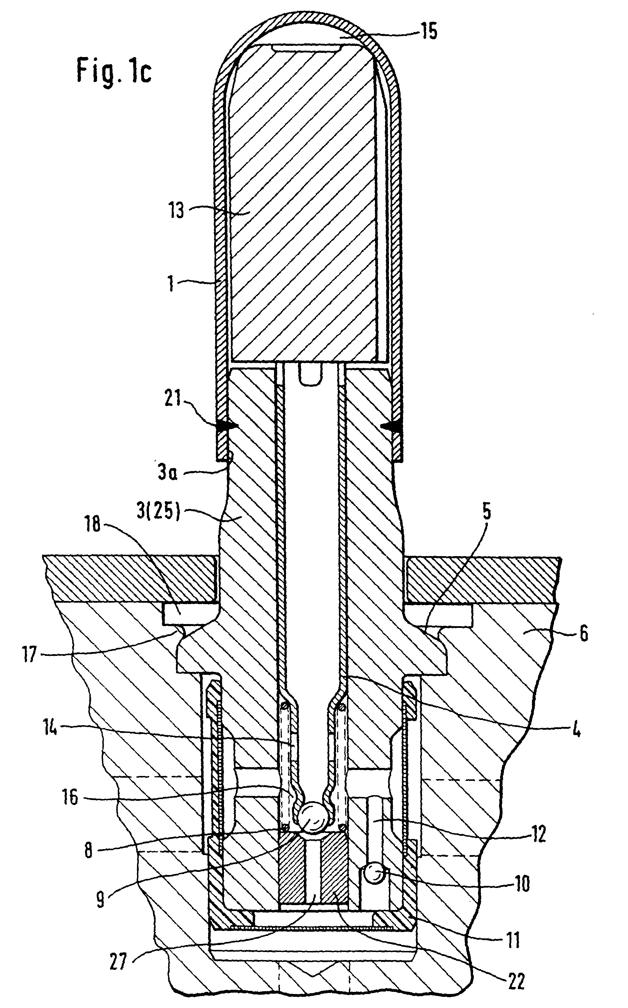

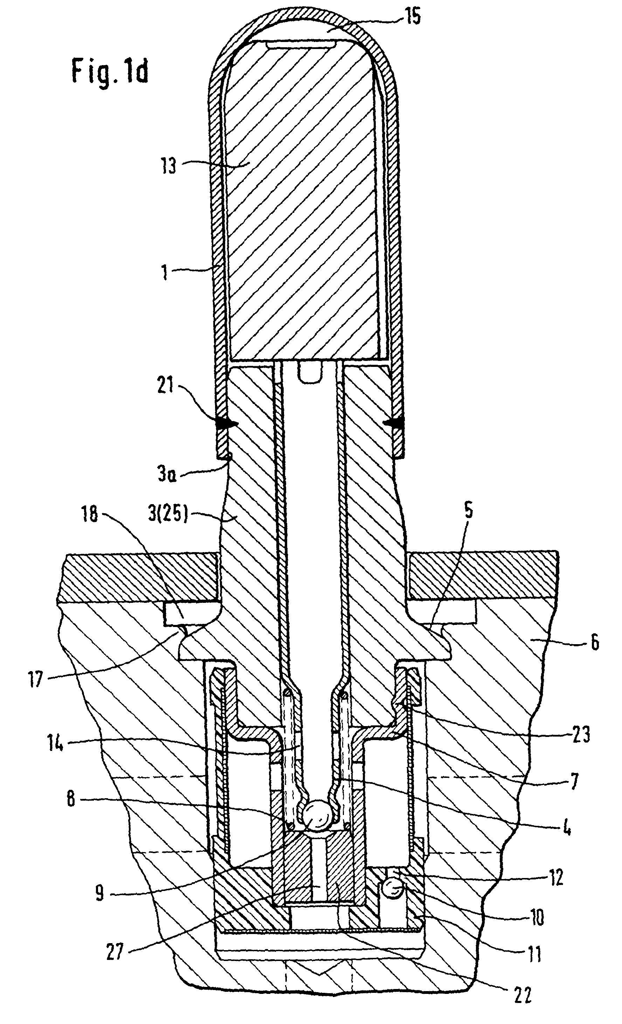

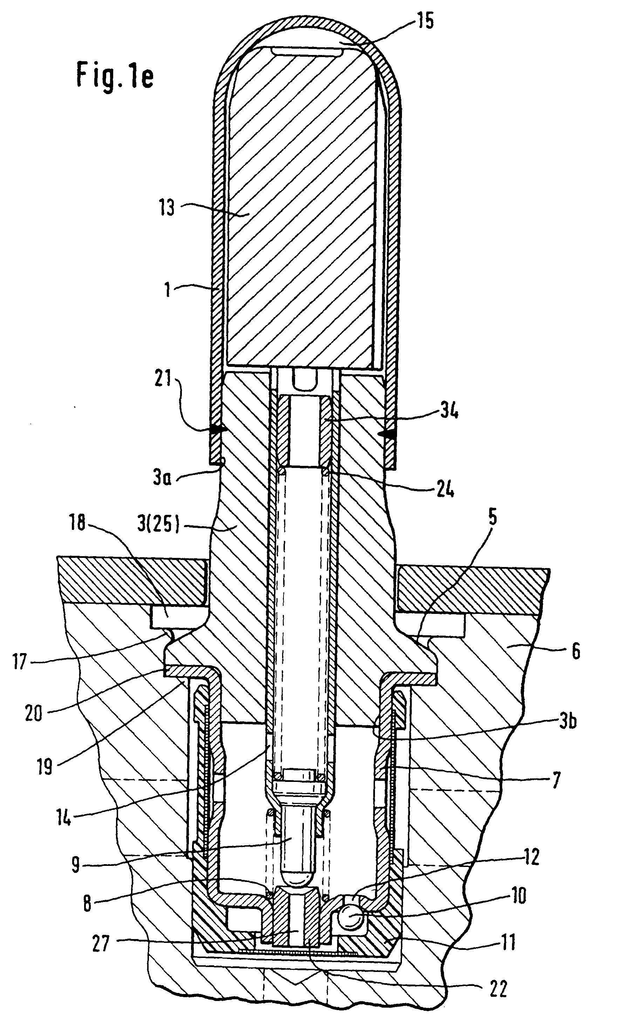

Die Fig. 1b zeigt abweichend von Fig. 1a ein Elektromagnetventil, in dessen topfförmigen Ventilsitz - Aufnahmekörper 7 ein separater, mit einer Preßpassung im Ventilsitz - Aufnahmekörper 7 versehener Hülsenkörper 22 eingepreßt ist, der an der zum Ventilschließglied 9 zugewandten Stirnseite eine als Ventilsitz wirksame Kegeldichtfläche aufweist. Der Hülsenkörper 22 übernimmt hierbei überdies zum Zwecke der Einstellung des Magnetanker - Restluftspaltes sinngemäß die Funktion des aus Fig. 1a bekannten Einstellstiftes 2, da der rohrförmige Ventilstößel 4 im Gegensatz zu Fig. 1 nunmehr in Fig. 1b unmittelbar an der Stirnfläche des Magnetankers 13 anliegt.

Auch in der Ausführungsform des Elektromagnetventils nach Fig. 1c wird der aus Fig. 1b beschriebene Hülsenkörper 22 verwendet, jedoch mit dem Unterschied, daß dieser unmittelbar in das in Richtung des Filterbodens verlängerte Ventilgehäuse 3 mit einer Preßverbindung eingesetzt ist, so daß abweichend von den Darstellungen nach Fig. 1a und b der Ventilsitz - Aufnahmekörper 7 ein einstückiges Bestandteil des Ventilgehäuses 3 bildet.

In großer Annäherung an die Ausführungsform nach Fig. 1b zeigt die Fig. 1d ein Elektromagnetventil, dessen topfförmiger Ventilsitz - Aufnahmekörper 7 im Bereich des massiven Hülsenkörpers 22 mit einem besonders schlanken, hülsenförmigen Abschnitt versehen ist, auf den der Filtertopf 11 aufgeschoben ist. In den Filtertopf 11 ist gleichzeitig das Rückschlagventil und der dem Rückschlagventil 10 zugehörige Bypasskanal 12 geschickt eingebracht. Die Befestigung des Ventilsitz - Aufnahmekörpers 7 am Ventilgehäuse 3 erfolgt mittels einer von außen auf den dünnwandigen Ventilsitz - Aufnahmekörper 7 an der Führungsfläche aufgebrachten Radialverstemmung, die in der gewählten Schnittdarstellung als in den Fortsatz 31 des Ventilgehäuses 3 gerichtete Nase 23 zu erkennen ist.

Alle bisher dargestellten Elektromagnetventile können auf verblüffend einfache Weise mit einer Überdruckventilfunktion versehen werden, die im nachfolgenden anhand der Fig. 1e beispielhaft erläutert werden soll. Dadurch, daß der rohrförmige Ventilstößel 4 einen entsprechend großzügig bemessenen, zylindrischen Hohlraum beinhaltet, kann anstelle der bisher beschriebenen festen Anordnung des Ventilschließglied 9 es am Ventilstößel 4 eine axial bewegliche Anordnung des Ventilschließgliedes 9 gewählt werden, wozu das Ventilschließglied 9 in der Form eines Tauchkolbens von oben in den Hohlraum des Ventilstößels 4 eingeführt wird, bis es mit seiner kegelförmigen Anschlagschulter am verjüngten Stößelende anliegt und zugleich mit seinem aus dem offenen Endabschnitt des Ventilstößels 4 hervorstehenden Schließkörper dem Hülsenkörper 22 bzw. dem Ventilsitz - Aufnahmekörper 7 federkraftbeaufschlagt zugewandt ist. Der für die Überdruckventilfunktion maßgebende Öffnungsdruck wird durch eine Ventilfeder 24 bestimmt, die zwischen dem Ventilschließglied 9 und einem in den Ventilstößel 4 eingepreßten Anschlag eingespannt ist, so daß in der elektromagnetisch erregten Schließstellung des Ventils zunächst auf an sich bekannte Weise das Ventilschließglied 9 druckmitteldicht am Ventilsitz - Aufnahmekörper 7 anliegt, bis der unterhalb des Ventilsitz - Aufnahmekörpers 7 anstehende hydraulische Druck den von der Ventilfeder 24 auf das Ventilschließglied 9 ausgeübte Druck übersteigt, wodurch das Ventilschließglied 9 von seinem Ventilsitz abgehoben wird, um die Überdruckventilfunktion zu realisieren.

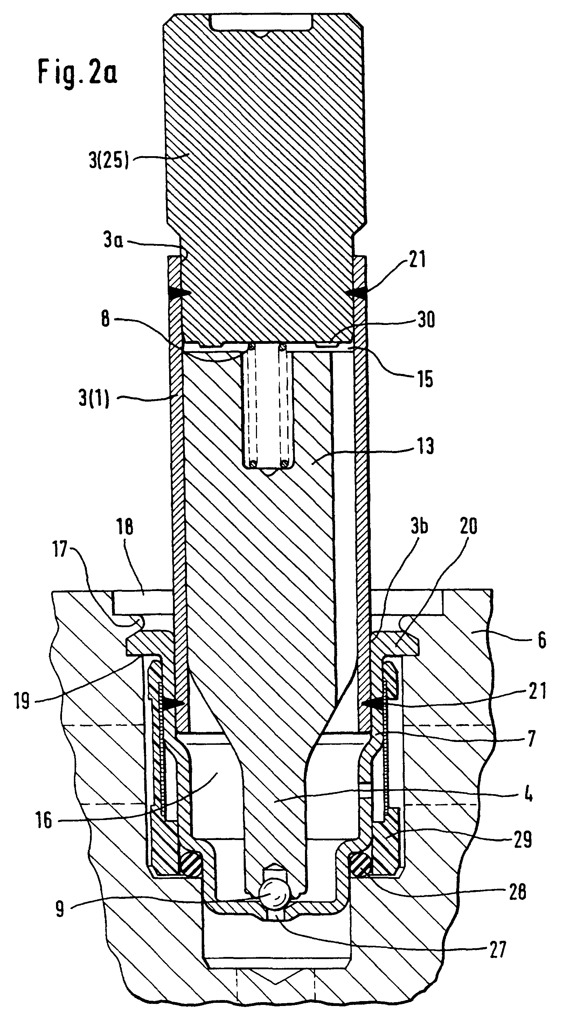

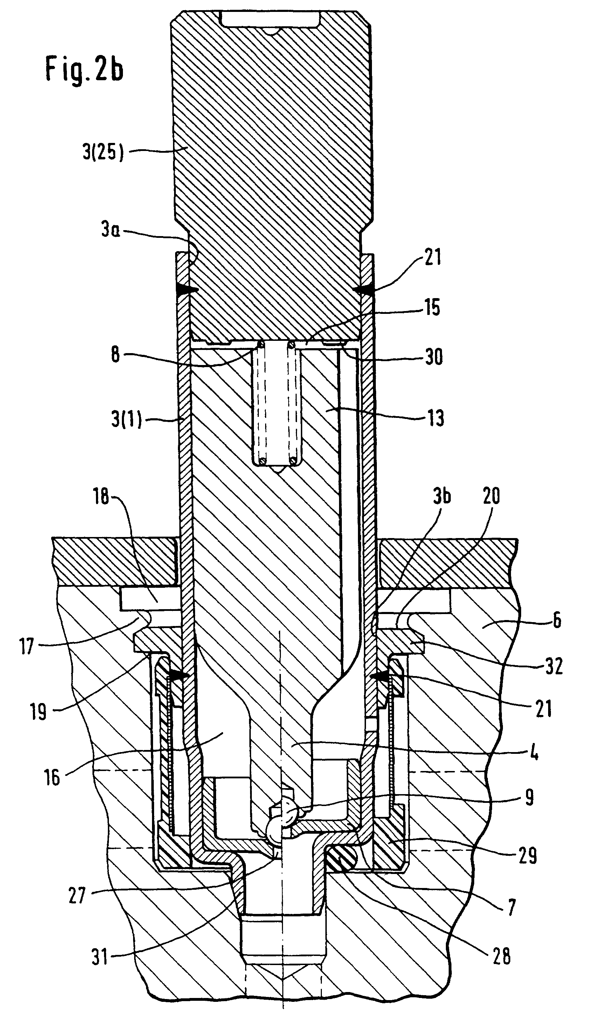

Nachfolgend sollen nunmehr die wesentlichen Merkmale der Erfindung anhand eines in Grundstellung normalerweise geschlossenen Elektromagnetventils nach Fig. 2a explizit erläutert werden. Im Anschluß an diese Erläuterung werden dazu bestehende Bauteilvariationen des Ventils anhand den Fig. 2b bis Fig. 2d erläutert.

Das Elektromagnetventil nach Fig. 2a zeigt gleichfalls wie die Elektromagnetventile nach den Fig. 1a bis 1e einen als Kaltfließpreßteil gefertigten Magnetanker 13, einen aus einem Kaltfließpreßteil gefertigten Magnetkern 25 und einen topfförmigen Ventilsitz - Aufnahmekörper 7, der am Ventilgehäuse 3 befestigt ist. Soweit dünnwandige Hülsenteile zur Anwendung gelangen, werden sie gleichfalls wie in den vorangegangenen Ausführungsbeispielen zweckmäßigerweise als Tiefziehteil oder ggf. auch als Rundknetteil ausgeführt. Im einzelnen zeigt hierzu die Fig. 2a ein hülsenförmiges, als Tiefziehteil ausgebildetes Ventilgehäuse 3 , dessen beide Endabschnitte Führungsflächen 3a, 3b bilden, die auf der einen Seite von einem Magnetkern 25 und auf der anderen Seite von dem topfförmigen Ventilsitz - Aufnahmekörper 7 begrenzt werden. Beide am hülsenförmigen Ventilgehäuse 3 angebrachten Teile 25, 7 sind vorzugsweise mittels einer Schweißverbindung 19 dauerhaft befestigt. Innerhalb dieser vorbeschriebenen Teile befindet sich ein Magnetanker 13 , der an seiner Wandung - wie in Fig.1-entweder mit Druckausgleichsnuten oder mit einem Kantprofil versehen ist, um einen ungehinderten hydraulischen Druckausgleich im Ventil zu gewährleisten. Wie bereits auch zu Fig.1 erwähnt wurde, ist der Magnetanker 13 als auch der Magnetkern 25 als Kaltfließpreßteil ausgeführt, wozu sich insbesondere ein Werkstoff mit der Kennzeichnung X8Cr17 oder alternativ dazu ein Werkstoff gemäß der Kennzeichnung X6Cr17 eignet. Das hülsenförmige Ventilgehäuse 3 besteht vorzugsweise aus austenitischem Stahl gemäß der Klassifikation 1.43.03. Gleicher Werkstoff gelangt zur Anwendung für den topfförmigen Ventilsitz - Aufnahmekörper 7, wobei diese Werkstoffwahl gleichfalls auf die eingangs beschriebenen Hülsenbauteile der Elektromagnetventile nach Fig. 1a bis 1e zur Anwendung gelangt. Das Elektromagnetventil nach Fig. 2a ist unmittelbar am Rand 20 des topfförmigen Ventilsitz - Aufnahmekörpers 7 mittels einer Außenverstemmung im Ventilträger 6 befestigt. Der Topf des Ventilsitz - Aufnahmekörpers 7 weist ebenso wie in allen vorangegangenen Ausführungsbeispielen zumindest eine radial als auch axial verlaufende Bohrung auf, wobei die in Ventillängsachse angeordnete Bohrung mittels eines Prägeverfahrens den eigentlichen Ventilsitz - Aufnahmekörper 7 für das Ventilschließglied 9 bildet, während die quer dazu den Ventilsitz - Aufnahmekörper 7 durchdringende Bohrung in der Regel als Blendenbohrung ausgeführt ist, um in der offenen Ventilschaltstellung eine Druckmittelverbindung zwischen den unterhalb und oberhalb des Ventilschließgliedes 9 gelegenen Kanälen im Ventilträger 6 herzustellen. Als Ventilschließglied 9 wird vorzugsweise eine im Magnetanker 13 verstemmt befestigte Kugel verwendet, die unter Wirkung einer zwischen dem Magnetanker 13 und dem Magnetkern 25 befindliche Rückstellfeder 8 auf die Ventilsitzfläche des Ventilschließkörpers 9 gepreßt ist. Die Abdichtung des topfförmigen Ventilsitz - Aufnahmekörpers 7 in einer Stufenbohrung des Ventilträgers 6 kann mittels eines zwischen dem Ventilsitz - Aufnahmekörpers 7 und dem Ventilträger 6 angeordneten O-Ring 28 geschehen. Ein Ringfilter 29 erstreckt sich entlang dem Ventilsitz-Aufnahmekörper 7 bis zum O-Ring 28, so daß ein zusätzlicher Halt und ggf. auch Transportschutz für den O-Ring 28 vor der eigentlichen Montage in der Stufenbohrung des Ventilträgers 6 gegeben ist. Das Elektromagnetventil ist nach außen hin lediglich über eine einfache Außenverstemmung im Ventilträger 6 abgedichtet und befestigt, während die durch den O-Ring 28 gegebene untere Abdichtung im Ventilträger 6 einen Kurzschlußstrom zwischen dem unterhalb des Ventilschließgliedes 9 in den Ventilträger 6 einmündenden Kanal und dem auf Höhe des Ringfilters gelegenen Querkanals verhindert. Der Magnetkern 25 ist in Form eines Stopfens in den offenen Bereich des hülsenförmigen Ventilgehäuses 3 eingepreßt und nach den erforderlichen Einstellmaßnahmen mittels einer Schweißnaht dauerhaft fixiert. Durch entsprechende Vorsprünge zwischen dem Magnetkern 25 und dem Magnetanker 13, die sich entweder am einen oder am anderen vorgenannten Teil 13, 25 befinden können, wird das sog. Magnetankerkleben verhindert. Zur platzsparenden Aufnahme und Führung der Rückstellfeder ist entsprechend der Abbildung der Magnetanker 13 mit einer Längsbohrung versehen. Alle beschriebenen Teile befinden sich in einer koaxialen Lage.

Im nachfolgenden sollen nunmehr auf der Grundlage der Darstellung nach Fig. 2a abweichende Detaillösungen beschrieben werden, die Alternativen oder Ergänzungen zu der Darstellung nach Fig. 2a darstellen.

Die Fig. 2b zeigt basierend auf dem Elektromagnetventil nach Fig. 2a eine Detailvariante zur Darstellung des Ventilgehäuses 3, dessen hülsenförmiger Abschnitt sich bis unterhalb des Ventilschließgliedes 9 erstreckt und dort einen topfförmigen Ventilsitz - Aufnahmekörper 7 aufnimmt, der nicht wie in Fig. 2a mit dem Ventilgehäuse 3 verschweißt ist, sondern lediglich bis auf Anschlag an einer abgesetzten Stufe des Ventilgehäuses 3 eingepreßt ist. Sofern sich an diesen Bereich ein schneidenförmiger Fortsatz 31 des Ventilgehäuses 3 bis in den unteren Kanalanschluß des Ventilträgers 6 erstreckt, kann dieser bei Wunsch oder Bedarf eine metallische Abdichtung bewirken, die gemäß der Darstellung in der linken Schnitthälfte zu erkennen ist. In der rechts zur Ventillängsachse gezeigten Darstellung wird der bereits aus Fig. 2a bekannte O-Ring 28 als Abdichtmaßnahme gezeigt, was jedoch ein zusätzlicher Aufwand darstellt. Ein im Ventilträger 6 verstemmtes Ringteil 32 ist mit dem Ventilgehäuse 3 zur Abdichtung und Befestigung des Ventils verschweißt.

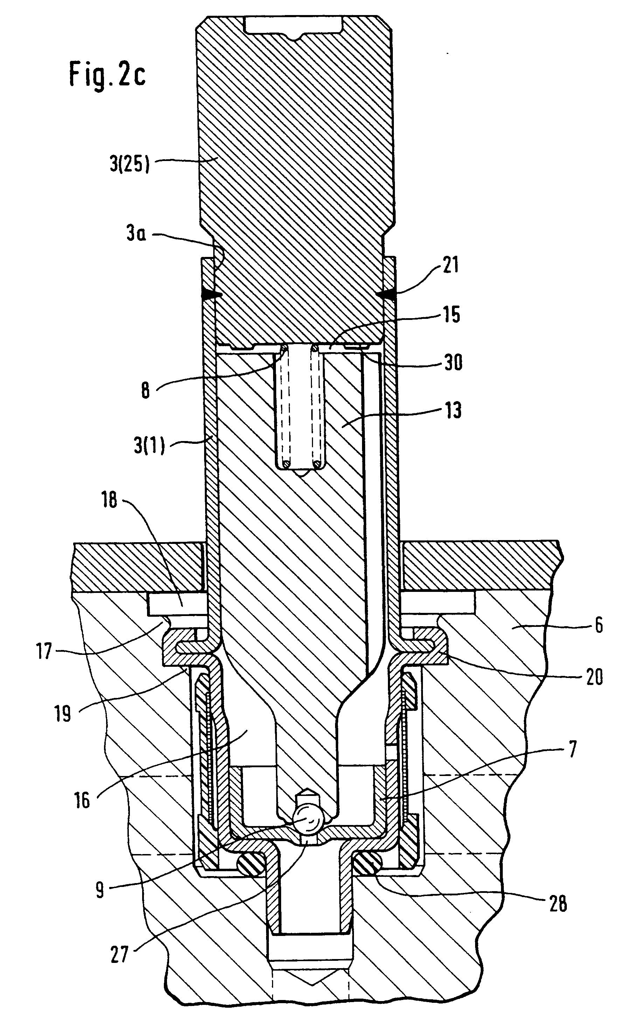

Die Fig. 2c zeigt eine zweiteilige Ausführung in Form einer Verbördelung beider Hülsenteile, wobei der äußere Rand 20 der Bördelverbindung gleichzeitig den Verstemmbereich des Elektromagnetventils im Ventilträger 6 bildet. Alle übrigen Details entsprechen den Darstellungen nach Figur 2a und 2b.

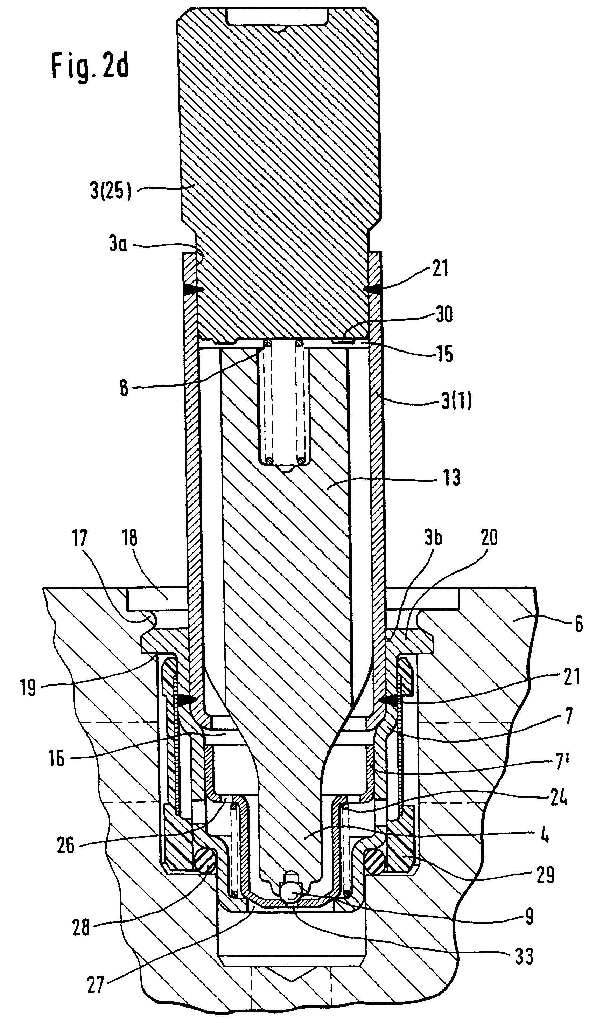

In der Fig. 2d wird ein Elektromagnetventil der in Grundstellung geschlossenen Bauart gezeigt, das eine Funktionserweiterung in Form eines sog. Zweistufenventils aufweist, wozu das am Magnetanker 13 angebrachte Ventilschließglied 9 nicht unmittelbar an dem im Ventilträger 6 verstemmten Ventilsitz - Aufnahmekörper 7 anliegt, sondern an einem zweiten, innerhalb des vorgenannten Ventilsitz - Aufnahmekörpers 7 beweglich geführten Ventilsitz - Aufnahmekörper 7'. Zwischen beiden Ventilsitz - Aufnahmekörpern 7,7' befindet sich eine Ventilfeder 24 eingespannt, die dafür sorgt, daß bei elektromagnetischer Erregung des Magnetankers 13 der als Zwischentopf ausgebildete Ventilsitz - Aufnahmekörper 7' der Bewegung des Magnetankers 13 folgt, sofern beiderseits des Ventilsitz - Aufnahmekörpers 7' ein Druckausgleich vorherrscht. Damit verharrt der innere Ventilsitz - Aufnahmekörper 7' am Ventilschließglied 9 des Magnetankers 13, wodurch die relativ kleine Ventilsitzöffnung durch das kugelförmige Ventilschließglied 9 verschlossen bleibt. Eine Druckmittelverbindung zwischen den vertikal und horizontal einmündenden Druckmittelkanälen erfolgt zwangsläufig in der erregten Stellung des Magnetankers 13 sodann über den relativ großen Ventilsitzquerschnitt, der zwischen den beiden Ventilsitz - Aufnahmekörpern 7,7' gelegen ist. Sofern der oberhalb des Ventilschließgliedes 9 anstehende hydraulische Druck größer ist als der unterhalb des Ventilschließgliedes 9, wird auch bei elektromagnetischer Erregung des Magnetankers 13 der innere Ventilsitz - Aufnahmekörper 7' mit seiner Dichtfläche gegen den äußeren Ventilsitz - Aufnahmekörper 7 gedrückt, wodurch ausschließlich die relativ kleine Ventilsitzöffnung des inneren Ventilsitz - Aufnahmekörpers 7' vom Ventilschließglied 9 freigegeben wird. Der äußere als auch der innere Ventilsitz - Aufnahmekörper 7,7' sind als Kaltfließpreßteile oder als Tiefziehteile ausgebildet, so daß besonders relativ kleine, einfach und präzise herzustellende Bauteile in die Aufnahmebohrung des Ventilträgers 6 einzusetzen sind. Analog zum äußeren Ventilsitz - Aufnahmekörper 7 ist auch der innere Ventilsitz - Aufnahmekörper 7' mit großzügig bemessenen Durchmittelbohrungen 26 und Gleitflächen im Bereich der Topferweiterung versehen, um einen sicher Führung des inneren Ventilsitz - Aufnahmekörpers 7 zu gewährleisten.

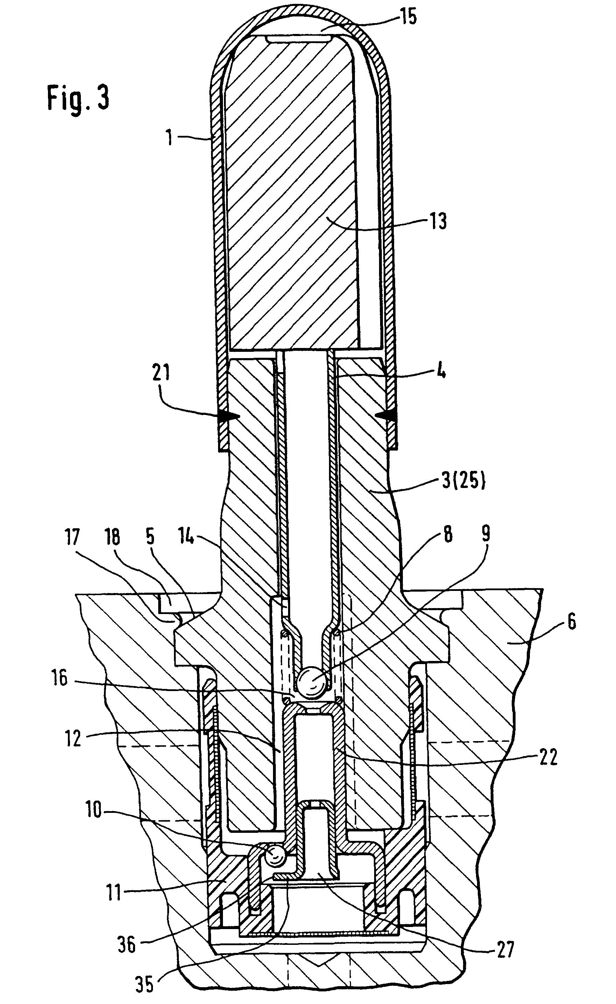

Das Elektromagnetventil nach Figur 3 zeigt abweichend von der nächstgelegenen Ventilkonstruktion nach Figur 1c einen in der Länge etwas verkürztes hohlzylinderförmiges Ventilgehäuse 3, in das am unteren Ende in den Hohlraum 16 ein vorzugsweise als Tiefziehteil ausgeführter Hülsenkörper 22 eingepreßt ist, der einerseits an dem zum Ventilschließglied 9 gerichteten Ende eine Ventilsitzkontur aufweist und andererseits am entgegengelegenen Ende mit einer weiteren Ventilsitzkontur für das Rückschlagventil 10 versehen ist. Um das Rückschlagventil 10 gegen ein Herausfallen zu sichern und es damit in seiner Lage zu positionieren, ist ein Hülsenteil 35 von unten in die den Hülsenkörper 22 durchdringende Druckmittelbohrung 27 eingesetzt, das im vorliegenden Ausführungsbeispiel durch den klein gewählten Öffnungsquerschnitt die Funktion einer Festblende übernimmt. Das Hülsenteil 35 weist außerhalb seiner Einpreßlänge im Hülsenkörper 22 einen axialen als auch radialen Überstand auf, zwischen dem das kugelförmige Rückschlagventil 10 am erweiterten, die Ventilsitzkontur aufweisenden Bereich des Hülsenkörpers 22 gehalten ist. Im abbildungsgemäßen Ausführungsbeispiel ist der radiale Überstand als Zunge 36 des als Tiefziehteil ausgeführten Hülsenteils 35 zu erkennen. Das Hülsenteil 35 bildet folglich mit dem Rückschlagventil 10 und dem Hülsenkörper 22 eine vormontierte Einheit, die um das zur Einstellung des Ventilhubes notwendige Maß in den kanalähnlichen Hohlraum 16 eingepreßt wird. Die aus der Figur 1c bekannte Bypassöffnung 12 verläuft nunmehr als Längsnut im Bereich der Preßverbindung an der Mantelfläche des Hülsenkörpers 22 entlang in den Hohlraum 16. Auf das am Hülsenteil 35 überstehenden Ende des gestuften Hülsenkörpers 22 ist der Filtertopf 11 aufgeschoben, so daß eine flüssigkeitsdichte Befestigung entsteht. Alle nicht beschriebenen Einzelheiten des Ventils nach Figur 3 entsprechen der beschreibenden Darstellung des Ventils nach Figur 1c oder einer der Varianten davon gemäß den Figuren 1a, 1b, 1d oder 1e.

Bezugszeichenliste
- 1: Ventilhülse
- 2: Einstellstift
- 3: Ventilgehäuse
- 4: Ventilstößel
- 5: Schulter
- 6: Ventilträger
- 7,7': Ventilsitz-Aufnahmekörper
- 8: Rückstellfeder
- 9: Ventilschließglied
- 10: Rückschlagventil
- 11: Filtertopf
- 12: Bypassöffnung
- 13: Magnetanker
- 14: Querkanal
- 15: Hohlraum
- 16: Hohlraum
- 17: Verstemmung
- 18: Aufnahmebohrung
- 19: Stufe
- 20: Rand
- 21: Schweißverbindung
- 22: Hülsenkörper
- 23: Nase
- 24: Ventilfeder
- 25: Magnetkern
- 26: Druckmittelbohrung
- 27: Druckmittelbohrung
- 28: O-Ring
- 29: Ringfilter
- 30: Vorsprung
- 31: Fortsatz
- 32: Ringteil
- 33: Ventilsitzöffnung
- 34: Anschlag
- 35: Hülsenteil
- 36: Zunge

## Patentansprüche

1. Elektromagnetventil, insbesondere für schlupfgeregelte Radbremsen, mit einem in einem Ventilgehäuse (3, 25) geführten Ventilstößel (4), der ein Ventilschließglied (9) aufweist, mit einem dem Ventilschließglied (9) zugewandten Ventilsitz - Aufnahmekörper (7), der mit dem Ventilgehäuse (3, 25) eine eigenständig handhabbare Unterbaugruppe bildet, sowie mit einem den Ventilstößel (4) betätigenden Magnetanker (13), der mittels einer am Ventilgehäuse (3, 25) angeordneten Ventilspule elektromagnetisch betätigbar ist, **dadurch gekennzeichnet, daß** der Magnetanker (13) als Kaltfließpreßteil ausgebildet ist, und daß das Ventilgehäuse (3,25) als Tiefziehteil oder Kaltfließpreßteil ausgeführt ist.

2. Elektromagnetventil nach Anspruch 1, **dadurch gekennzeichnet, daß** der Magnetanker (13) aus einem Werkstoff gemäß der Kennzeichnung X8Cr17 oder X6Cr17 hergestellt ist.

3. Elektromagnetventil nach Anspruch 1, **dadurch gekennzeichnet, daß** das Ventilgehäuse (3) einen Endabschnitt mit einer Führungsfläche (3b) aufweist, auf den der Ventilsitz - Aufnahmekörper (7) aufgeschoben ist, und daß der Ventilsitz - Aufnahmekörper (7) die Form eines Topfes aufweist, dessen Rand (20) mittels einer Verstemmung (17) an einer Stufe (19) einer Aufnahmebohrung (18) in einem Ventilträger (6) befestigt ist.

4. Elektromagnetventil nach Anspruch 1 oder 3, **dadurch gekennzeichnet, daß** der Ventilsitz - Aufnahmekörper (7, 7') als Tiefziehteil aus einem dünnwandigen Metallmantel gebildet ist, in dessen Topfboden mittels eines Prägeverfahrens ein eine Druckmittelbohrung (27) begrenzender Ventilsitz eingebracht ist.

5. Elektromagnetventil nach Anspruch 4, **dadurch gekennzeichnet, daß** der Ventilsitz - Aufnahmekörper (7) entlang seiner Wandung einen Filtertopf (11) aufnimmt, der die in dem Ventilsitz - Aufnahmekörper (7) eingebrachte Druckmittelbohrung (26, 27) überdeckt.

6. Elektromagnetventil nach Anspruch 1, **dadurch gekennzeichnet, daß** ein den Magnetkern (25) bildender Teil des Ventilgehäuses (3) vorzugsweise gemäß der Werkstoffklassifikation X8Cr17 oder X6Cr17 als Kaltfließpreßteil ausgeführt ist.

7. Elektromagnetventil nach Anspruch 1, **dadurch gekennzeichnet, daß** der Ventilstößel (4) als Rundknet- oder Tiefziehteil zu einem dünnwandigen Rohrteil geformt ist, in dessen auf den Ventilsitz - Aufnahmekörper (7) gerichteten Endbereich das Ventilschließglied (9) gehalten ist.

8. Elektromagnetventil nach Anspruch 7, **dadurch gekennzeichnet, daß** in den auf den Magnetanker (13) gerichteten Endbereich des rohrförmigen Ventilstößels (4) ein Einstellstift (2) eingepreßt ist, der sich mit seinem am Ventilstößel (4) überstehenden Ende am Magnetanker (13) abstützt.

9. Elektromagnetventil nach Anspruch 7, **dadurch gekennzeichnet, daß** zwischen dem Ventilstößel (4) und dem Ventilsitz - Aufnahmekörper (7) eine Rückstellfeder (8) eingespannt ist.

## Claims

1. An electromagnetic valve, in particular for slip-controlled wheel brakes, with a valve tappet (4) guided in a valve housing (3, 25) that exhibits a valve closing element (9), with a valve-seat holding element (7) facing the valve closing element (9) and forming an independent subassembly together with the valve housing (3, 25), as well as with an armature (13) that activates the valve tappet (4) and can be excited electromagnetically by means of a valve coil arranged on the valve housing (3, 25),
**characterized in that** the armature (13) is designed as a cold extrusion pressed part and that the valve housing (3, 25) is designed as a deep drawn part or cold extrusion pressed part.

2. The electromagnetic valve according to claim 1,
**characterized in that** the armature (13) is made of a material according to identification code X8Cr17 or X6Cr17.

3. The electromagnetic valve according to claim 1,
**characterized in that** the valve housing (3) has an end section with a guiding surface (3b), onto which the valve-seat holding element (7) is pushed, and that the valve-seat holding element (7) has the form of a pot, whose edge (20) is attached by means of a wedge (17) to a step (19) of a location hole (18) in a valve support (6).

4. The electromagnetic valve according to claim 1 or 3,
**characterized in that** the valve-seat holding element (7, 7') is designed as a deep drawn part from a thin-walled metal coat, and a valve seat limiting a pressure medium hole (27) is arranged on the bottom of its pot by means of a stamping process.

5. The electromagnetic valve according to claim 4,
**characterized in that** the valve-seat holding element (7) accommodates a filter pot (11) along its wall, which covers the pressure medium hole (26, 27) made in the valve-seat holding element (7).

6. The electromagnetic valve according to claim 1,
**characterized in that** a part of the valve housing (3) forming the magnetic core (25) preferably is designed as a cold extrusion pressed part according to material classification X8Cr17 or X6Cr17.

7. The electromagnetic valve according to claim 1,
**characterized in that** the valve tappet (4) is formed into a thin-walled pipe part from a rotary kneaded part or deep drawn part, and the valve closing element (9) is supported on its end section facing the valve-seat holding element (7).

8. The electromagnetic valve according to claim 7,
**characterized in that** an adjusting pin (2) is pressed into the end section of the pipe-shaped valve tappet (4) facing the armature (13), and that the end of the adjusting pin (2) projecting from the valve tappet (4) is supported on the armature (13).

9. The electromagnetic valve according to claim 7,
**characterized in that** a resetting spring (8) is compressed between the valve tappet (4) and the valve-seat holding element (7).

## Revendications

1. Soupape électromagnétique, en particulier pour un freinage des roues à régulation du glissement, avec un poussoir de soupape (4) guidé dans une cage de soupape (3, 25), qui comporte un obturateur de soupape (9), avec un corps de réception (7) du siège de soupape tourné vers l'obturateur de soupape (9), lequel forme avec la cage de soupape (3, 25) un sous-groupe pouvant être manipulé séparément, ainsi qu'avec une palette magnétique (13) actionnant le poussoir de soupape (4), laquelle peut être actionnée de façon électromagnétique au moyen d'une bobine de soupape disposée sur la cage de soupape (3, 25), **caractérisée en ce que** la palette mobile (13) est réalisée comme pièce extrudée à froid, et **en ce que** la cage de soupape (3, 25) est réalisée comme pièce obtenue par emboutissage profond ou comme pièce extrudée à froid.

2. Soupape électromagnétique selon la revendication 1, **caractérisée en ce que** la palette mobile (13) est fabriquée dans un matériau de désignation X8Cr17 ou X6Cr17.

3. Soupape électromagnétique selon la revendication 1, **caractérisée en ce que** la cage de soupape (3) comporte une portion terminale avec une surface de guidage (3b) sur laquelle est enfilé le corps de réception (7) du siège de soupape, et **en ce que** le corps de réception (7) du siège de soupape présente la forme d'un pot dont le bord (20) est fixé, par un matage (17), sur un gradin (19) d'un perçage de réception (18) pratiqué dans un porte-soupape (6).

4. Soupape électromagnétique selon la revendication 1 ou 3, **caractérisée en ce que** le corps de réception (7, 7') du siège de soupape est formé en tant que pièce obtenue par emboutissage profond dans une enveloppe de métal à paroi mince, dans le fond du pot étant pratiqué, par un procédé d'estampage, un siège de soupape délimitant un perçage permettant le passage d'un fluide sous pression (27).

5. Soupape électromagnétique selon la revendication 4, **caractérisée en ce que** le corps de réception (7) du siège de soupape reçoit, le long de sa paroi, un pot de filtrage (11) qui recouvre le perçage (26, 27) pratiqué dans le corps de réception (7) du siège de soupape.

6. Soupape électromagnétique selon la revendication 1, **caractérisée en ce qu'**une partie de la cage de soupape (3), formant le noyau magnétique (25), est réalisée de préférence selon la classification des matériaux X8Cr17 ou X6Cr17 en tant que pièce extrudée à froid.

7. Soupape électromagnétique selon la revendication 1, **caractérisée en ce que** le poussoir de soupape (4) est formé, en tant que pièce martelée ou obtenue par emboutissage profond, en une pièce tubulaire à paroi mince dans la zone d'extrémité de laquelle, orientée vers le corps de réception (7) du siège de soupape, est maintenu l'obturateur de soupape (9).

8. Soupape électromagnétique selon la revendication 7, **caractérisée en ce que** dans la zone d'extrémité, dirigée vers la palette mobile (13), du poussoir de soupape (4) de forme tubulaire, est enfoncé un doigt de réglage (2) qui prend appui, par son extrémité dépassant du poussoir de soupape (4), contre la palette mobile (13).

9. Soupape électromagnétique selon la revendication 7, **caractérisée en ce qu'**un ressort de rappel (8) est tendu entre le poussoir de soupape (4) et le corps de réception (7) du siège de soupape.
